# EUROPÄISCHE PATENTSCHRIFT

(11) **EP 3 390 932 B1**
(45) Veröffentlichungstag und Bekanntmachung des Hinweises auf die Patenterteilung: **14.04.2021**
(21) Anmeldenummer: 16810252.3
(22) Anmeldetag: 12.12.2016
(51) Int. Cl.: F25D 23/08, F25D 23/02

(54) **KÜHL- UND/ODER GEFRIERGERÄT**
COOLING AND/OR FREEZING DEVICE
APPAREIL DE RÉFRIGÉRATION ET/OU DE CONGÉLATION

(30) Priorität: 14.12.2015 DE 102015016203; 15.01.2016 DE 102016000369
(43) Veröffentlichungstag der Anmeldung: 24.10.2018
(73) Patentinhaber: Liebherr-Hausgeräte Lienz GmbH, 9900 Lienz (AT)
(72) Erfinder: STOCKER, Richard, 9911 Assling (AT); WALDER, Stefan, 9920 Sillian (AT)
(74) Vertreter: Herrmann, Uwe
(86) Internationale Anmeldenummer: PCT/EP2016/002101
(87) Internationale Veröffentlichungsnummer: WO 2017/102077

(56) Entgegenhaltungen:
- EP-A1- 1 816 030
- WO-A1-2006/090958
- WO-A1-2006/101291
- KR-A- 20060 099 355

## Beschreibung

Die vorliegende Erfindung betrifft ein Kühl- und/oder Gefriergerät mit wenigstens einem Korpus, der wenigstens einen gekühlten Innenraum umschließt, sowie mit wenigstens einer ersten und einer zweiten gegensinnig öffnenden am Korpus angelenkten Tür, mittels derer der Innenraum verschließbar ist, wobei eine oder beide Türen eine oder mehrere Dichtungen aufweisen, die sich im geschlossenen Zustand der Türen in dem Bereich zwischen den Türen befinden, wobei sich die wenigstens eine Dichtung in ihrer geschlossenen Endlage befindet, wenn die Türen geschlossen sind.

Derartige Kühl- und/oder Gefriergeräte sind als sogenannte French-Door-Geräte bekannt. Bei diesen Geräten existieren Dichtungen nicht nur zwischen den Türen des Geräts und dem Gerätekorpus sondern auch in dem Bereich zwischen den beiden gegensinnig öffnenden Türen, damit auch dieser Bereich gegen das Eindringen von Wärme und Feuchtigkeit in den gekühlten Innenraum abgedichtet werden kann.

Im geschlossenen Zustand beider Türen liegen die eine oder mehreren zwischen den Türen befindlichen Dichtungen derart aneinander an, dass die gewünschte Abdichtungsfunktion zwischen den Türen erreicht wird und somit ein Wärmeeintrag in den gekühlten Innenraum zwischen den Türen weitgehend oder vollständig verhindert wird.

Problematisch bei einer derartigen Dichtungsanordnung ist es, dass die wenigstens eine Dichtung in einer definierten Öffnungsposition bzw. Endlage angeordnet sein muss, wenn eine Tür geöffnet oder geschlossen wird, um eine Kollision dieser Dichtung mit Dichtung der anderen Tür bzw. mit der anderen Tür selbst zu verhindern.

Aus dem Stand der Technik ist es bekannt, durch die Verwendung von Magneten oder Federelementen eine definierte Öffnungsposition, d.h. eine definierte offene Endlage der Dichtungen zu realisieren um eine Kollision beim Schließen und Öffnen der Tür zu verhindern. Ein Nachteil dieser Anordnung besteht darin, dass diese gegenüber Toleranzen, wie Spaltmaßen, Feder- und Magnetkräften vergleichsweise empfindlich ist. Zudem kann eine in die Dichtung integrierte Heizung die Bewegung bzw. den erforderlichen Hub der Dichtung behindern.

Denkbare Fehlerfälle bestehen darin, dass bei zu kleinem Spaltmaß bzw. nicht sauber anliegender Dichtung, die Dichtung mit der Gegentür kollidiert, was zur Folge hat, dass die betreffende Tür nicht ganz geschlossen werden kann.

Haben die in die beiden Türen verbauten Dichtungen eine bestimmte Magnetpolausrichtung, kann sich diese kurz vor der geschlossenen Endlage negativ auf das Schließverhalten dahingehend auswirken, dass eine Tür z.B. um wenige Millimeter geöffnet bleibt. Dies kann z.B. beim Einsatz einer Schließhilfe leicht übersehen werden, was zur Folge hat, dass Umgebungsluft in das Gerät eingetragen wird.

Werden die Spaltmaße zu groß gewählt oder sind die Magnetkräfte, die durch die in den Dichtungen befindlichen Magnete ausgeübt werden, zu gering, kann die Dichtung unter Umständen geöffnet bleiben, d.h. der Spalt wird nicht vollständig abgedichtet, was wiederum zu einem Eintrag von Umgebungsluft in den gekühlten Innenraum führen kann

Dokumente WO 2006/090958 A1, WO 2006/101291 A1, KR 2006 0099355 A und EP 1 816 030 A1 stellen den Stand der Technik dar.

Der vorliegenden Erfindung liegt daher die Aufgabe zu Grunde, ein Kühl und/oder Gefriergerät der eingangsgenannten Art dahingehend weiterzubilden, dass die Bewegung der Dichtung prozesssicher erfolgt.

Darunter ist zu verstehen, dass eine Kollision der Dichtung mit Bauteilen der Gegentür, d.h. der geschlossenen Tür, beim Schließen und öffnen der Tür verhindert wird und dass - sobald die Tür geschlossen ist - eine saubere und zuverlässige Abdichtung gewährleistet ist.

Diese Aufgabe wird durch ein Kühl- und/oder Gefriergerät mit den Merkmalen des Anspruchs 1 gelöst.

Danach ist vorgesehen, dass das Gerät wenigstens einen Türöffnungssensor sowie wenigstens eine mit diesem in Verbindung stehende Antriebseinheit aufweist, die ausgebildet ist, die wenigstens eine Dichtung der Tür von der anderen Tür weg ausgehend von der geschlossenen Endlage der Dichtung in eine offene Endlage der Dichtung zu bewegen, wobei die Antriebseinheit des Weiteren so ausgebildet ist, dass diese aktiviert wird und somit die Dichtung bewegt, wenn der Türöffnungssensor das Öffnen einer Tür oder das Berühren der Tür durch einen Nutzer, d.h. die Öffnungsabsicht erfasst.

Unter dem Begriff "Endlage" ist jede beliebiege Position der Dichtung zu verstehen und nicht zwingend die maximale Auslenkung der Dichtung. Die offene Endlage der Dichtung ist eine Position der Dichtung, in der diese einen kleineren Abstand zu ihrer Gegenfläche aufweist als in der geschlossenen Endlage.

Diese Antriebseinheit mit einer oder mehreren durch diese bewegbaren Dichtungen kann in einer oder auch in beiden Türen vorgesehen sein.

Denkbar ist es, dass in dem Gerät wenigstens eine Elektronik bzw. wenigstens eine Steuerung oder Regelung vorgesehen ist, die das Signal des Türöffnungssensors empfängt und je nach Signal die Antriebseinheit in der gewünschten Weise ansteuert. Durch die vorliegende Erfindung ist gewährleistet, dass die Dichtung wenigstens einer Tür von der Dichtung oder sonstigen Gegenfläche der anderen Tür wegbewegt wird, d.h. ein Spalt zwischen den Türen bewusst erzeugt wird, um ein ungehindertes Öffnen einer Tür zu ermöglichen.

Die Antriebseinheit wird nicht gemäß der Erfindung z.B. durch einen Stellmotor, wie beispielsweise einen Servoantrieb, wie er aus dem Modellbau bekannt ist, gebildet werden. Gemäß der Erfindung ist die Antriebseinheit nicht ein Elektromotor oder als elektromagnetisch ausgebildete Antriebseinheit ausgeführt, sondern pneumatisch oder hydraulisch ausgebildete Antriebseinheit.

Von der Erfindung ist sowohl der Fall umfasst, dass die Antriebseinheit der Tür aktiviert wird, die geöffnet wird bzw. geöffnet werden soll, als auch der Fall, dass die Antriebseinheit der anderen Tür, d.h. der geschlossenen Tür, die nicht geöffnet werden soll aktiviert wird. Entscheidend ist, dass die wenigstens eine Dichtung von ihrer Gegenfläche entfernt wird, an der sie im geschlossenen Zustand beider Türen anliegt.

Von der Erfindung ist auch der Fall umfasst, dass die Antriebseinheiten beider Türen aktiviert werden, wenn ein entsprechendes Sensorsignal erfasst wird, das anzeigt, dass eine Tür geöffnet wird oder geöffnet werden soll.

Grundsätzlich können beide der Türen mit einer derartigen Antriebseinheit ausgestattet sein oder auch nur eine Tür.

In einer weiteren Ausgestaltung der Erfindung ist vorgesehen, dass es sich bei den Türöffnungssensor um einen Türkontaktschalter handelt oder auch um einen Berührungssensor. Ist ein Türkontaktschalter vorgesehen, erfasst dieser, dass die Tür sich nicht mehr in ihrer Schließstellung befindet und aktiviert sodann unmittelbar oder über eine Steuer- oder Regelungseinheit die wenigstens eine Antriebseinheit, die eine oder beide Dichtungen der Türen, die sich zwischen den Türen befinden zurückzieht.

Die Türen können jeweils eine oder mehrere zwischen den Türen angeordnete Dichtungen aufweisen. Die Türen können des Weiteren jeweils eine oder mehrere Antriebseinheiten zum Bewegen der wenigstens einen Dichtung aufweisen.

Bei dem Sensor kann es sich auch um einen Berührungssensor handeln, der an beliebiger Stelle der Tür oder auch an anderer Stelle des Geräts angeordnet ist. Denkbar ist beispielsweise die Integration oder Anordnung eines Berührungssensors am Türgriff. Wird der Türgriff berührt, wird dies durch den Berührungssensor erkannt. Es werden sodann eine oder mehrere Dichtungen durch die Antriebseinheit zurückgezogen, sodass der Spalt zwischen den Türen vergrößert wird und ein ungehindertes Öffnen der wenigstens einen Tür möglich ist.

Vorzugsweise ist jeder der Tür ein eigener Türöffnungssensor zugeordnet bzw. weist jede der Türen einen eigenen Türöffnungssensor auf.

Die Antriebseinheit kann die Dichtung unmittelbar oder auch über eine Mechanik in eine definierte geöffnete Endlage bewegen. Diese Mechanik kann beispielsweise einen Exzenter aufweisen und/oder eine Feder, die jeweils in geeigneter Weise auf die Dichtung einwirken bzw. mit dieser in Verbindung stehen.

In einer weiteren Ausgestaltung der Erfindung ist vorgesehen, dass die Antriebseinheit so ausgebildet ist oder so angesteuert wird, dass diese die Dichtung in der offenen Endlage hält, solange die Tür geöffnet ist. In diesem Fall wird die offene Endlage so lange beibehalten, bis die Tür wieder geschlossen ist. Nach dem vollständigen Schließen der Tür erfasst der Türöffnungssensor den geschlossenen Zustand und es wird das erneute Bewegen der Dichtung in die geschlossene Endlage freigegeben bzw. bewirkt. Die Dichtung fährt sodann wieder in ihre geschlossene Endlage und stellt somit eine einwandfreie Abdichtung im Übergangsbereich zwischen den Türen sicher.

Diese Rückstellbewegung der Dichtung kann ebenfalls durch die Antriebseinheit oder auch durch ein anderes Element, wie beispielsweise eine Feder oder dergleichen vorgenommen werden.

Durch die vorliegende Erfindung werden die Vorteile erreicht, dass es keine Kollisionsgefahr durch eine undefinierte Dichtungslage beim Schließen der Tür bzw. der Gegentür gibt. Wird die Dichtung in ihrer offenen Endlage gehalten so lange eine Tür offensteht, kann es zu keiner Kollision mit der Gegentür kommen.

Die Magnetpolung der Türdichtung hat durch den ausreichenden Abstand zur Gegenfläche, d.h. zur Fläche, an der die Türdichtung an der anderen Tür anliegt, keine Auswirkung auf das Schließverhalten. Bei der Gegenfläche kann es sich um eine weitere Dichtung oder auch nur um eine Seitenfläche der Tür selbst handeln.

Von der Erfindung ist der Fall umfasst, dass die betreffende Dichtung oder Dichtungen als Magnettürdichtungen ausgeführt sind. Von der Erfindung ist jedoch auch der Fall umfasst, dass auf die Verwendung von Magneten in der Dichtung bzw. in den Dichtungen verzichtet wird.

Ein weiterer Vorteil der Erfindung besteht darin, dass der Dichtungshub in sich selbst, d.h. ohne Berücksichtigung der Auslenkung der Mechanik auf ein notwendiges Minimum reduziert werden kann, was sich positiv auf den Verschleiß der Dichtung auswirkt.

Spaltmaße bei den Türen haben keine Auswirkungen, da der Antrieb die Dichtung so auslenkt bzw. zurückzieht, dass stets ein hinreichender Gesamthub gewährleistet ist. Dies kann beispielsweise durch den Einsatz eines oder mehrerer Federelemente gewährleistet werden, die die Varianz des Türspalts abdecken und dabei sicherstellen, dass der Antrieb die wenigstens eine Dichtung stets in ihre Endlage bewegt und nicht auf unterschiedliche Spaltmaße ausgelegt werden muss, was sich hinsichtlich der Kosten positiv auswirkt.

Durch das gezielte Lösen bzw. Zurückziehen wenigstens einer der Dichtungen kann sichergestellt werden, dass beim Öffnen einer Tür die andere Tür geschlossen bleibt und nicht mitgezogen wird. Wie bereits oben ausgeführt, kann die erfindungsgemäße Ausgestaltung des Dichtungskonzepts mit Antriebseinheit an beiden Türen angeordnet sein, sich jedoch aber auch nur auf eine Tür beschränken. Befindet sich die Antriebseinheit und die bewegbare Dichtung nur an einer Tür, kann vorgesehen sein, dass die Beheizung des Dichtungsbereichs auf der Gegenseite der Dichtung erfolgt, d.h. auf der Seite und an der Tür, die ohne bewegbare Dichtung ausgeführt ist. An dieser steht durch die fehlende Komplexität ausreichend Platz für eine Heizvorrichtung zur Verfügung.

Wie bereits oben ausgeführt, ist die Antriebseinheit pneumatisch, hydraulisch, oder wird durch eine Kombination dieser Antriebstechniken gebildet.

Weitere Einzelheiten und Vorteile der Erfindung werden anhand eines im folgenden beschriebenen Ausführungsbeispiels näher erläutert.

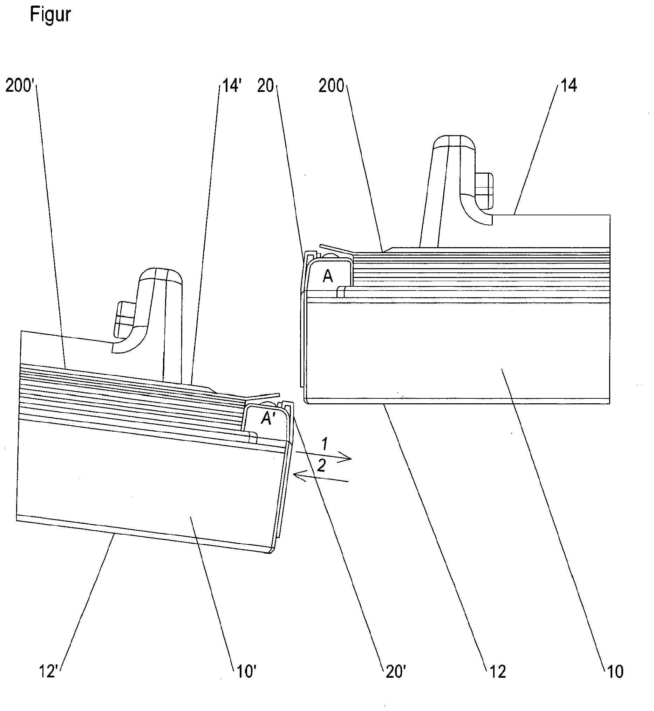

Die einzige Figur zeigt den zueinander gewandten Abschnitt zweier Türen eines French-Door-Gerätes.

Das Ausführungsbeispiel betrifft ein French-Door-Gerät, das zwei Türen aufweist, die gegenläufig geöffnet werden. Die Türen sind jeweils mit ihrem einen Seitenbereich durch Scharniere oder Lager etc. an den Gerätekorpus angelenkt. An dem anderen Seiten der Türen befinden sich Dichtungen, die den Spalt zwischen den Türen abdichten.

Die einzige Figur zeigt exemplarisch in einer Querschnittsansicht den Bereich der beiden Türen 10, 10', in dem diese im geschlossenen Zustand aneinander liegen. In der Figur ist die links dargestellte Tür 10' leicht geöffnet.

Die Türen bestehen jeweils aus einer Außentür bzw. aus einem Außenbereich 12, 12', der beispielsweise als Blech ausgeführt sein kann und einer Innentür bzw. einem Innenbereich 14, 14', der beispielsweise aus Kunststoff bestehen kann. Wie dies aus der Figur hervorgeht, befindet sich an diesem Innenbereich Stege, an denen eine oder mehrere Türabsteller befestigt werden können.

Das Bezugszeichen 200, 200' in der Figur kennzeichnet Magnettürdichtungen, mittels derer die Türen dichtend an einer Gegenfläche des Korpus anliegen.

In den einander zugewandten Bereichen der Türen 10, 10', d.h. im Bereich der einander zugewandten vertikal verlaufenden Türschmalseiten sind diese mit Dichtungen 20, 20' versehen, die eine Abdichtung zwischen den Türen vornehmen, wenn beide Türen 10, 10' geschlossen sind.

Das Bezugszeichen A, A' kennzeichnet jeweils eine beliebige Antriebseinheit, die beispielsweise als Stellmotor ausgeführt sein kann und die die Aufgabe hat, die Dichtung 20, 20' von der jeweiligen Tür wegzubewegen (Pfeilrichtung 1) oder zu der Tür hinzubewegen (Pfeilrichtung 2).

An dem Korpus des Geräts oder auch an der Tür befindet sich wenigstens ein Türkontaktschalter.

Dieser Türkontaktschalter erfasst, ob die Tür geöffnet ist oder nicht.

In dem in der Figur dargestellten Beispiels ist die linke Tür 10' geöffnet, was durch den entsprechenden Türkontaktschalter erfasst wird. Sobald der Türkontaktschalter das Öffnen der Tür meldet, wird dieses Signal z.B. über eine Elektronik bzw. Steuer- oder Regelungseinheit an die Antriebseinheit A' übertragen. Diese wird daraufhin aktiviert und zieht die Türdichtung 20' von der geschlossen bleibenden Tür 10 weg, sodass sich der Spalt bzw. Abstand zwischen den Türen 10, 10' vergrößert. Somit kann die Tür 10' ohne Kollision mit Teilen der Gegentür problemlos geöffnet und auch wieder geschlossen werden. Die Dichtung 20' kann dann in dieser Position verbleiben bis die Tür 10' wieder geschlossen ist, was durch den Türkontaktschalter erkannt wird. Sobald die Tür 10' wieder geschlossen ist, wird die Dichtung 20' wieder zurückverfahren (gemäß Pfeilrichtung 1) und liegt dann wieder an der Gegenfläche der Tür 10 dichtend an.

Diese Gegenfläche kann ebenfalls eine Dichtung 20 darstellen oder auch einfach nur die Stirnseite bzw. Schmalseite der Tür 10 ohne Dichtung.

Durch die vorliegende Erfindung wird eine prozesssichere Bewegung der Türdichtung erreicht.

## Patentansprüche

1. Kühl- und/oder Gefriergerät mit wenigstens einem Korpus, der wenigstens einen gekühlten Innenraum umschließt, sowie mit wenigstens einer ersten (10)
und einer zweiten (10') gegensinnig öffnenden, am Korpus angelenkten Tür, mittels derer der Innenraum verschließbar ist, wobei eine oder beide Türen wenigstens eine Dichtung (20, 20') eine oder aufweisen, die sich im geschlossenen Zustand der Türen in dem Spalt zwischen den Türen befindet, wobei sich die wenigstens eine Dichtung in ihrer geschlossenen Endlage befindet, wenn die Türen geschlossen sind, wobei das Gerät wenigstens einen Türöffnungssensor sowie wenigstens eine mit diesem in Verbindung stehende Antriebseinheit (A, A') aufweist, die ausgebildet ist, die wenigstens eine Dichtung einer Tür von der anderen Tür weg von der geschlossenen Endlage in die offene Endlage der Dichtung zu bewegen, wobei die offene Endlage der Dichtung eine Position der Dichtung ist, in der diese einen kleineren Abstand zu ihrer Gegenfläche aufweist als in der geschlossenen Endlage, wobei die Antriebseinheit des Weiteren derart ausgebildet ist, dass diese aktiviert wird, wenn der Türöffnungssensor das Öffnen einer Tür oder das Berühren des Gerätes durch einen Nutzer erfasst, **dadurch gekennzeichnet, dass** die Antriebseinheit als pneumatisch oder hydraulisch ausgebildete Antriebseinheit ausgeführt ist.

2. Kühl- und/oder Gefriergerät nach Anspruch 1, **dadurch gekennzeichnet, dass** es sich bei dem Türöffnungssensor um einen Türkontaktschalter oder um einen Berührungssensor handelt.

3. Kühl- und/oder Gefriergerät nach einem der vorhergehenden Ansprüche, **dadurch gekennzeichnet, dass** die Antriebseinheit (A, A') unmittelbar mit der Dichtung (20, 20') verbunden ist oder über eine Mechanik mit der Dichtung (20, 20') in Verbindung steht.

4. Kühl- und/oder Gefriergerät nach Anspruch 3, **dadurch gekennzeichnet, dass** die Mechanik wenigstens einen Exzenter aufweist.

5. Kühl- und/oder Gefriergerät nach Anspruch 3 oder 4, **dadurch gekennzeichnet, dass** die Mechanik wenigstens eine Feder umfasst.

6. Kühl- und/oder Gefriergerät nach einem der vorhergehenden Ansprüche, **dadurch gekennzeichnet, dass** die Antriebseinheit (A, A') derart ausgebildet ist oder derart angesteuert ist, dass diese die Dichtung (20, 20') in der offenen Endlage hält, solange die Tür (10, 10') nicht geschlossen ist.

7. Kühl- und/oder Gefriergerät nach einem der vorhergehenden Ansprüche, **dadurch gekennzeichnet, dass** die Antriebseinheit (A, A') derart ausgebildet ist oder derart angesteuert ist, dass diese die Dichtung (20, 20') erst in die geschlossene Endlage bewegt, wenn die Tür (10, 10') geschlossen ist.

8. Kühl- und/oder Gefriergerät nach einem der vorhergehenden Ansprüche, **dadurch gekennzeichnet, dass** die wenigstens eine Dichtung (20, 20') eine Magnetdichtung ist oder dass die Dichtung (20, 20') ohne Magnete ausgeführt ist.

9. Kühl- und/oder Gefriergerät nach einem der vorhergehenden Ansprüche, **dadurch gekennzeichnet, dass** jeder Tür (10, 10') ein eigener Türöffnungssensor zugeordnet ist.

## Claims

1. A refrigerator and/or freezer with at least one body that encloses at least one cooled interior space, and with at least one first (10) and one second (10') door opening in opposite directions, which doors are articulated to the body, by means of which the interior space can be closed, wherein one or both doors include at least one seal (20, 20') that in the closed condition of the doors is disposed in the gap between the doors, wherein the at least one seal is in its closed end position when the doors are closed, wherein the appliance includes at least one door opening sensor and at least one drive unit (A, A') communicating with the same, which is configured to move the at least one seal of a door away from the other door from the closed end position into the open end position of the seal, wherein the open end position of the seal is a position of the seal where the seal has a smaller distance to its counter surface than in the closed end position, wherein the drive unit furthermore is configured such that the same is activated when the door opening sensor detects the opening of a door or the touching of the appliance by a user, **characterized in that** the drive unit is configured as a pneumatic or hydraulic drive unit.

2. The refrigerator and/or freezer according to claim 1, **characterized in that** the door opening sensor is a door contact switch or a touch sensor.

3. The refrigerator and/or freezer according to any of the preceding claims, **characterized in that** the drive unit (A, A') is directly connected to the seal (20, 20') or communicates with the seal (20, 20') via a mechanism.

4. The refrigerator and/or freezer according to claim 3, **characterized in that** the mechanism includes at least one eccentric.

5. The refrigerator and/or freezer according to claim 3 or 4, **characterized in that** the mechanism comprises at least one spring.

6. The refrigerator and/or freezer according to any of the preceding claims, **characterized in that** the drive unit (A, A') is configured such or is actuated such that the same holds the seal (20, 20') in the open end position as long as the door (10, 10') is not closed.

7. The refrigerator and/or freezer according to any of the preceding claims, **characterized in that** the drive unit (A, A') is configured such or is actuated such that the same only moves the seal (20, 20') into the closed end position when the door (10, 10') is closed.

8. The refrigerator and/or freezer according to any of the preceding claims, **characterized in that** the at least one seal (20, 20') is a magnetic seal or that the seal (20, 20') is configured without magnets.

9. The refrigerator and/or freezer according to any of the preceding claims, **characterized in that** with each door (10, 10') a separate door opening sensor is associated.

## Revendications

1. Appareil de réfrigération et/ou de congélation avec au moins un corps, qui renferme au moins un espace intérieur réfrigéré, ainsi qu'avec au moins une première (10) et une deuxième (10') porte s'ouvrant dans le sens opposé, articulée sur le corps, au moyen desquelles l'espace intérieur peut être fermé, dans lequel une ou les deux portes présentent au moins un joint d'étanchéité (20, 20'), qui se trouve, dans l'état fermé des portes, dans l'interstice entre les portes, dans lequel l'au moins un joint d'étanchéité se trouve dans sa position finale fermée quand les portes sont fermées, dans lequel l'appareil présente au moins un capteur d'ouverture de porte ainsi qu'au moins une unité d'entraînement (A, A') reliée à celui-ci, qui est réalisée pour déplacer l'au moins un joint d'étanchéité d'une porte de manière à s'éloigner de l'autre porte depuis la position finale fermée dans la position finale ouverte du joint d'étanchéité, dans lequel la position finale ouverte du joint d'étanchéité est une position du joint d'étanchéité dans laquelle celui-ci présente un espacement par rapport à sa contre-surface plus petit que dans la position finale fermée, dans lequel l'unité d'entraînement est réalisée par ailleurs de telle manière qu'elle est activée quand le capteur d'ouverture de porte détecte l'ouverture d'une porte ou l'effleurement de l'appareil par un utilisateur, **caractérisé en ce que** l'unité d'entraînement est réalisée en tant qu'une unité d'entraînement réalisée de manière pneumatique ou de manière hydraulique.

2. Appareil de réfrigération et/ou de congélation selon la revendication 1, **caractérisé en ce que** le capteur d'ouverture de porte est un commutateur de contact de porte ou un capteur d'effleurement.

3. Appareil de réfrigération et/ou de congélation selon l'une quelconque des revendications précédentes, **caractérisé en ce que** l'unité d'entraînement (A, A') est reliée directement au joint d'étanchéité (20, 20') ou est reliée au joint d'étanchéité (20, 20') par l'intermédiaire d'un mécanisme.

4. Appareil de réfrigération et/ou de congélation selon la revendication 3, **caractérisé en ce que** le mécanisme présente au moins un excentrique.

5. Appareil de réfrigération et/ou de congélation selon la revendication 3 ou 4, **caractérisé en ce que** le mécanisme comprend au moins un ressort.

6. Appareil de réfrigération et/ou de congélation selon l'une quelconque des revendications précédentes, **caractérisé en ce que** l'unité d'entraînement (A, A') est réalisée de telle manière ou est pilotée de telle manière que celle-ci maintient le joint d'étanchéité (20, 20') dans la position finale ouverte tant que la porte (10, 10') n'est pas fermée.

7. Appareil de réfrigération et/ou de congélation selon l'une quelconque des revendications précédentes, **caractérisé en ce que** l'unité d'entraînement (A, A') est réalisée de telle manière ou est pilotée de telle manière que celle-ci déplace le joint d'étanchéité (20, 20') d'abord dans la position finale fermée quand la porte (10, 10') est fermée.

8. Appareil de réfrigération et/ou de congélation selon l'une quelconque des revendications précédentes, **caractérisé en ce que** l'au moins un joint d'étanchéité (20, 20') est un joint d'étanchéité magnétique ou que le joint d'étanchéité (20, 20') est réalisé sans aimants.

9. Appareil de réfrigération et/ou de congélation selon l'une quelconque des revendications précédentes, **caractérisé en ce qu'**un capteur d'ouverture de porte propre est associé à chaque porte (10, 10').
